# EUROPÄISCHE PATENTSCHRIFT

(11) **EP 3 763 144 B1**
(45) Veröffentlichungstag und Bekanntmachung des Hinweises auf die Patenterteilung: **18.08.2021**
(21) Anmeldenummer: 19709865.0
(22) Anmeldetag: 04.03.2019
(51) Int. Cl.: H04W 16/14, H04W 76/15, H04W 88/06, H04W 88/10

(54) **HAUPTEINHEIT, SYSTEM UND VERFAHREN FÜR EIN INFOTAINMENTSYSTEM EINES FAHRZEUGS**
MAIN UNIT, SYSTEM AND METHOD FOR AN INFOTAINMENT SYSTEM OF A VEHICLE
UNITÉ PRINCIPAL, SYSTÈME ET PROCÉDÉ POUR UN SYSTÈME D'INFODIVERTISSEMENT D'UN VÉHICULE

(30) Priorität: 25.04.2018 DE 102018206335
(43) Veröffentlichungstag der Anmeldung: 13.01.2021
(73) Patentinhaber: Audi AG, 85045 Ingolstadt (DE)
(72) Erfinder: GAHNER, Enrico, 85088 Vohburg a.D. (DE)
(86) Internationale Anmeldenummer: PCT/EP2019/055258
(87) Internationale Veröffentlichungsnummer: WO 2019/206497

(56) Entgegenhaltungen:
- DE-A1-102015 224 740
- US-A1- 2013 288 606

## Beschreibung

Die Erfindung betrifft eine Haupteinheit (Head Unit) für ein Infotainmentsystem eines Fahrzeugs, welche mit einem mobilen Endgerät über eine Bluetooth-Verbindung koppelbar ist. Ferner betrifft die Erfindung ein System mit einem mobilen Endgerät und einer Haupteinheit eines Infotainmentsystems eines Fahrzeugs sowie ein Verfahren zum Austauschen eines digitalen Audiosignals zwischen einem mobilen Endgerät und einer Haupteinheit eines Infotainmentsystems eines Fahrzeugs.

Ein Infotainmentsystem eines Fahrzeugs umfasst gewöhnlich eine Haupteinheit (Head Unit) mit mehreren Funktionsmodulen wie einem Radio, einem CD-Spieler, einem Navigationssystem und dergleichen, ein oder mehrere mit der Haupteinheit verbundene Mikrofone und Lautsprecher sowie eine oder mehrere Schnittstellen zum kabelgebundenen oder drahtlosen Verbinden der Haupteinheit mit externen Geräten, beispielsweise einem mobilen Endgerät.

Die US 2016/0095142 A1 offenbart beispielsweise ein Verfahren zum Übertragen von Daten zwischen zwei elektronischen Geräten, bei dem die Daten zwischen den elektronischen Geräten prioritätsgesteuert über zwei gleichzeitig bestehende drahtlose Verbindungen der beiden elektronischen Geräte übertragen werden.

Funktionsmodule des Infotainmentsystems, welche akustische analoge Audiosignale wie beispielsweise sprachliche Äußerungen von Insassen des Fahrzeugs und/oder digitale Audiosignale, d.h. Audiodaten, wie beispielsweise Musikdaten einer CD verarbeiten, werden im Rahmen zunehmender Miniaturisierungsbestrebungen zumeist mittels spezialisierter hochintegrierter Schaltkreise realisiert.

Einen solchen integrierten Schaltkreis zum Verarbeiten von Audiosignalen, eine einen solchen integrierten Schaltkreis umfassende Kommunikationsvorrichtung sowie ein Steuerverfahren für einen solchen integrierten Schaltkreis offenbart die WO 2012/64272 A2. Mit dem integrierten Schaltkreis können an mehreren Signaleingängen eingehende unterschiedliche analoge oder digitale Audiosignale auf vielfältige Weise zu unterschiedlichen analogen oder digitalen Audiosignalen weiterverarbeitet und an mehrere Signalausgänge ausgegeben werden.

Während einer Fahrt eines Fahrzeugs herrschen in einem Innenraum des Fahrzeugs infolge von Fahrgeräuschen im Allgemeinen ungünstige akustische Bedingungen, welche ein Gespräch zwischen Insassen des Fahrzeugs behindern oder praktisch unmöglich machen können. Die Fahrgeräusche können von einem Typ und/oder einer Fahrgeschwindigkeit des Fahrzeugs, von Wetterbedingungen, von weiteren Fahrzeugen in einer Umgebung des Fahrzeugs oder sonstigen Geräuschkulissen abhängig sein.

Insbesondere Gespräche zwischen einem auf einem Vordersitz des Fahrzeugs sitzenden Insassen und einem auf einem Rücksitz des Fahrzeugs sitzenden Insassen sind dadurch erschwert, dass der Insasse auf dem Vordersitz sein Gesicht gewöhnlich nach vorn und von dem Insassen auf dem Rücksitz weg richtet, so dass letzterer akustische Äußerungen des ersteren nur mittelbar erfassen kann.

Zur Abhilfe offenbart die WO 2008/061205 A1 ein integriertes Kommunikationssystem für ein Kraftfahrzeug, welches ein Steuermodul sowie mit dem Steuermodul verbundene Mikrofone und Lautsprecher umfasst und auch bei schwierigen akustischen Bedingungen eine verbesserte akustische Kommunikation insbesondere zwischen vorne sitzenden Fahrzeuginsassen einerseits und hinten sitzenden Fahrzeuginsassen andererseits gewährleistet. Dies wird hauptsächlich durch eine im hinteren Bereich des Fahrzeuginnenraums gegenüber dem vorderen Bereich Innenraums des Fahrzeugs erhöhte Ausgabelautstärke der Lautsprecher erreicht.

Das Steuermodul des vorstehend beschriebenen Kommunikationssystems könnte ohne Weiteres in eine Haupteinheit eines Infotainmentsystems eines Fahrzeugs integriert sein. Eine weitere Funktion, welche von einer Haupteinheit eines modernen Infotainmentsystems üblicherweise bereitgestellt wird, ist ein Freisprechen während eines Telefongesprächs. Ein solches Freisprechen ist insbesondere für einen Fahrer des Fahrzeugs vorgeschrieben, welcher nach geltenden Vorschriften während der Fahrt des Fahrzeugs kein Mobiltelefon in der Hand halten darf. Selbstverständlich ist auch eine Freisprechfunktionalität von den erwähnten ungünstigen akustischen Bedingungen beeinträchtigt. Diese können akustische Äußerungen des Fahrzeuginsassen für einen anderen Gesprächsteilnehmer des Telefongesprächs überlagern und teilweise unverständlich machen.

So offenbart die DE 11 2010 005 020 T5 eine Vorrichtung und ein Verfahren zur Sprachsignalwiederherstellung. Dabei synthetisiert ein Synthesefilter der Vorrichtung mehrere Breitbandsprachsignale durch Kombinieren von Breitband-Phonemsignalen und Tonquellensignalen von einem Sprachsignal-Codebuch. Mittels einer Verzerrungsbewertungseinheit wird eines der synthetisierten Breitbandsprachsignale ausgewählt, welches gegenüber einem abgetasteten Schmalbandsprachsignal die geringste Verzerrung aufweist.

Die DE 10 2015 224 740 A1 offenbart eine Kopfeinheit für ein Infotainmentsystem eines Fahrzeugs, welche mit einem mobilen Endgerät über eine Bluetooth-Verbindung koppelbar und konfiguriert ist, bei einer Bluetooth-Datenübertragung mit einem über die Bluetooth-Verbindung gekoppelten mobilen Endgerät ein digitales Signal über eine WiFi-Verbindung auszutauschen.

Die US 2013/288606 A1 betrifft ein Freisprechsystem in einem Fahrzeug unter Verwendung eines Bluetooth Handsfree-Protokolls (HFP). Eine WiFi-Verbindung wird genutzt, um Videodaten und Musik-Audiodaten zu einem Entertainment-System zu übertragen.

Meist wird ein zum Telefonieren taugliches mobiles Endgerät über eine Bluetooth-Verbindung mit der Haupteinheit des Infotainmentsystems gekoppelt. Dem Bluetooth-Standard sind mehrere für verschiedene Zwecke vorgesehene Kommunikationsprofile zugeordnet. Zum Koppeln eines mobilen Endgeräts wird gewöhnlich ein sogenanntes Freihandprofil (Hands Free Profile, HFP) verwendet, welches allerdings zum Übertragen eines Audiosignals in Echtzeit nur eine bestimmte relativ geringe maximale Bandbreite reserviert. Entsprechend kann im Rahmen des HFP ein digitales Audiosignal mit einer maximalen Abtastfrequenz von lediglich 16 kHz übertragen werden, wodurch ein Frequenzspektrum eines übertragenen analogen akustischen Sprachsignals nach dem sogenannten Antialiasing-Theorem auf 8 kHz begrenzt ist. Dies führt zu einer verringerten Audioqualität des über die Bluetooth-Verbindung übertragenen digitalen Audiosignals.

Der Erfindung liegt daher die Aufgabe zugrunde, eine verbesserte Haupteinheit eines Infotainmentsystems eines Fahrzeugs zur Verfügung zu stellen, welche die beschriebenen Nachteile vermeidet und mit einem über eine Bluetooth-Verbindung gekoppelten mobilen Endgerät eine bessere Audioqualität zum Freisprechen gewährleistet. Darüber hinaus ist es eine Aufgabe der Erfindung, ein verbessertes System mit einem mobilen Endgerät und einer Haupteinheit eines Infotainmentsystems eines Fahrzeugs zu schaffen sowie ein verbessertes Verfahren zum Austauschen eines digitalen Audiosignals zwischen einem mobilen Endgerät und einer Haupteinheit eines Infotainmentsystems eines Fahrzeugs anzugeben.

Gegenstand der Erfindung ist eine Haupteinheit (Head Unit) für ein Infotainmentsystem eines Fahrzeugs, welche mit einem mobilen Endgerät über eine Bluetooth-Verbindung koppelbar ist, gemäß Anspruch 1. Derartige Haupteinheiten sind in einer Vielzahl moderner Fahrzeuge verbaut, wodurch sich viele Verwendungsmöglichkeiten der Erfindung ergeben.

Die erfindungsgemäße Haupteinheit ist konfiguriert, mit einem über die Bluetooth-Verbindung gekoppelten mobilen Endgerät ein digitales Audiosignal über eine weitere drahtlose Verbindung auszutauschen. Die weitere drahtlose Verbindung befreit das digitale Audiosignal von der Bandbreitenbeschränkung des Bluetooth-Standards HFP und ermöglicht so eine verbesserte Audioqualität beim Freisprechen. Der Fachmann versteht, dass das HFP weiterhin zum Steuern der Haupteinheit und des mit diesem gekoppelten mobilen Endgeräts verwendet wird.

In einer Ausführungsform hat die Haupteinheit ein Funkmodul für die weitere drahtlose Verbindung, insbesondere ein WLAN-Modul für eine WiFi-Verbindung, und/oder ein internes Mobilfunkmodul für eine Mobilfunkverbindung. Sowohl das WLAN-Modul als auch das interne Mobilfunkmodul stellen eine Bandbreite zur Verfügung, welche ein Austauschen eines digitalen Audiosignals mit einer höheren Abtastfrequenz als 16 kHz in Echtzeit erlaubt. Wenn das Funkmodul als ein WLAN-Modul ausgebildet ist, kann die Haupteinheit eine drahtlose Verbindung mit einem stationären WLAN-Hotspot außerhalb des Fahrzeugs herstellen.

In weiteren Ausführungsformen hat die Haupteinheit ein Verstärkermodul zum Verstärken des Audiosignals, ein Audiosignalverarbeitungsmodul zum Verarbeiten des Audiosignals und ein Audiosteuerungsmodul zum Steuern des Audiosignalverarbeitungsmoduls. Das Audioverarbeitungsmodul kann mehrere Audiocodecs (Sprachkodierer/-dekodierer) umfassen, welche ein akustisches Sprachsignal mittels jeweils unterschiedlicher Algorithmen in ein digitales Audiosignal transformieren und umgekehrt und auf diese Weise verschiedene Audioqualitäten des dem analogen akustischen Sprachsignal zuordneten digitalen Audiosignals bieten. Das Audiosteuerungsmodul kann als eine in der Haupteinheit installierte App vorgesehen sein und abhängig von einer für den Austausch des Audiosignals verfügbaren Bandbreite, an dem Telefongespräch beteiligten Geräten usw. den jeweils geeigneten Audiocodec und die optimale Abtastfrequenz zum Verarbeiten des digitalen Audiosignals bestimmen. Dabei kann das Bestimmen des geeigneten Audiocodecs sowie der optimalen Abtastfrequenz auch auf einem Aushandeln mit den beteiligten Geräten, insbesondere dem Gerät der Gegenseite, beruhen. Zudem können Verhaltensweisen der wirksamen Algorithmen optimal aufeinander abgestimmt werden.

In einer bevorzugten Ausführungsform ist die Haupteinheit zum Austauschen eines Audiosignals mit einer Abtastfrequenz, welche höher als 16 kHz ist und insbesondere mindestens 44 kHz beträgt, konfiguriert. Mit dem Bluetooth-HFP lässt die zum Übertragen eines digitalen Audiosignals verfügbare Bandbreite lediglich eine Abtastfrequenz von 16 kHz zu. Die weitere drahtlose Verbindung sowie die interne Mobilfunkverbindung stellen dagegen für ein Audiosignal eine Bandbreite bereit, welche eine Abtastfreqenz von über 16 kHz, insbesondere eine CD-Qualität mit einer Abtastfrequenz von 44 kHz oder darüber (Full-Band) erlaubt.

Gegenstand der Erfindung ist auch ein System mit einem mobilen Endgerät und einer Haupteinheit eines Infotainmentsystems eines Fahrzeugs, insbesondere einer erfindungsgemäßen Haupteinheit, welche über eine Bluetooth-Verbindung koppelbar sind, und welches konfiguriert ist, zwischen dem mobilen Endgerät und der Haupteinheit ein digitales Audiosignal auszutauschen, gemäß Anspruch 5.

Das erfindungsgemäße System ist konfiguriert, ein digitales Audiosignal zwischen dem mobilen Endgerät und der Haupteinheit über eine weitere drahtlose Verbindung auszutauschen, wenn sie über die Bluetooth-Verbindung gekoppelt sind. Damit ist der Austausch des Audiosignals von der Bandbreitenbeschränkung des HFP befreit.

In einer Ausführungsform ist das System konfiguriert, das Audiosignal zwischen dem mobilen Endgerät und der Haupteinheit über eine WiFi-Verbindung auszutauschen. Eine WiFi-Verbindung stellt eine Bandbreite zur Verfügung, welche ein Austauschen eines Audiosignals mit einer höheren Abtastfrequenz als das HFP erlaubt.

In einer bevorzugten Ausführungsform ist das System zum Austauschen eines Audiosignals mit einer Abtastfrequenz, welche höher als 16 kHz ist und insbesondere mindestens 44 kHz beträgt, konfiguriert. Infolge der weiteren drahtlosen Verbindung kann eine Audioqualität mit einer Abtastfrequenz von 44 kHz (CD-Standard) oder darüber (Full Band) erreicht werden.

In weiteren Ausführungsformen ist das mobile Endgerät ein Mobiltelefon, insbesondere ein Smartphone, oder ein Tablet. Das mobile Endgerät kann eine App umfassen, welche bei einer Bluetooth-Kopplung mit der Haupteinheit das digitale Audiosignal über die weitere drahtlose Verbindung umleitet.

Ein weiterer Gegenstand der Erfindung ist ein Verfahren zum Austauschen eines digitalen Audiosignals zwischen einem mobilen Endgerät, insbesondere einem Mobiltelefon, einem Smartphone oder einem Tablet, und einer Haupteinheit eines Infotainmentsystems eines Fahrzeugs, insbesondere einer erfindungsgemäßen Haupteinheit, bei dem das mobile Endgerät und die Haupteinheit über eine Bluetooth-Verbindung gekoppelt sind bzw. werden, gemäß Anspruch 9.

Bei dem erfindungsgemäßen Verfahren wird das Audiosignal über eine weitere drahtlose Verbindung, insbesondere über eine WiFi-Verbindung, zwischen dem mobilen Endgerät und der Haupteinheit ausgetauscht. Die weitere drahtlose Verbindung stellt dabei für den Austausch des Audiosignals eine größere Bandbreite zur Verfügung als das HFP.

In einer bevorzugten Ausführungsform wird ein Audiosignal mit einer Abtastfrequenz, welche höher als 16 kHz ist und insbesondere mindestens 44 kHz beträgt, ausgetauscht. Eine Abtastfrequenz von 44 kHz entspricht dem CD-Standard. Aber auch Abtastfrequenzen darüber (Full-Band) können über die weitere drahtlose Verbindung übertragen werden.

Die Erfindung ist anhand einer Ausführungsform in den Zeichnungen schematisch dargestellt und wird unter Bezugnahme auf die Zeichnungen weiter beschrieben. Es zeigt:
- Figur 1: in einer schematischen Darstellung eine Ausführungsform eines erfindungsgemäßen Systems mit einem mobilen Endgerät einer Haupteinheit eines Infotainmentsystems eines Fahrzeugs;
- Figur 2: in einer schematischen Detaildarstellung die in Figur 1 gezeigte Haupteinheit mit weiteren Verbindungen.

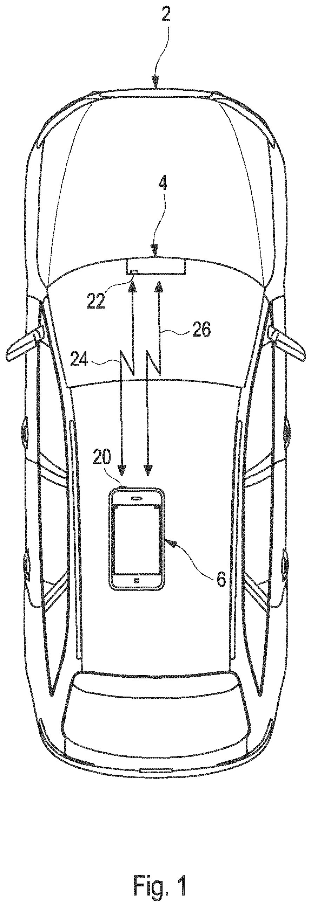

Figur 1 zeigt in einer schematischen Darstellung eine Ausführungsform eines erfindungsgemäßen Systems mit einem mobilen Endgerät 6 und einer Haupteinheit 4 eines Infotainmentsystems eines Fahrzeugs 2, welche einem Insassen des Fahrzeugs eine Freisprechfunktion zur Verfügung stellt. Das mobile Endgerät 6 und die Haupteinheit 4 sind jeweils über eine Bluetooth-Verbindung 24 koppelbar.

Das System ist konfiguriert, ein digitales Audiosignal zwischen dem mobilen Endgerät 6 und der Haupteinheit 4 über eine weitere drahtlose Verbindung 26 auszutauschen, wenn sie über die Bluetooth-Verbindung 24 gekoppelt sind. Das System ist insbesondere konfiguriert, das Audiosignal zwischen dem mobilen Endgerät 6 und der Haupteinheit 4 über eine neben der Bluetooth-Verbindung 24 bestehende WiFi-Verbindung auszutauschen.

Weiterhin ist das System konfiguriert, über die weitere drahtlose Verbindung 26 ein Audiosignal mit einer Abtastfrequenz, welche höher als 16 kHz ist und insbesondere mindestens 44 kHz beträgt, auszutauschen.

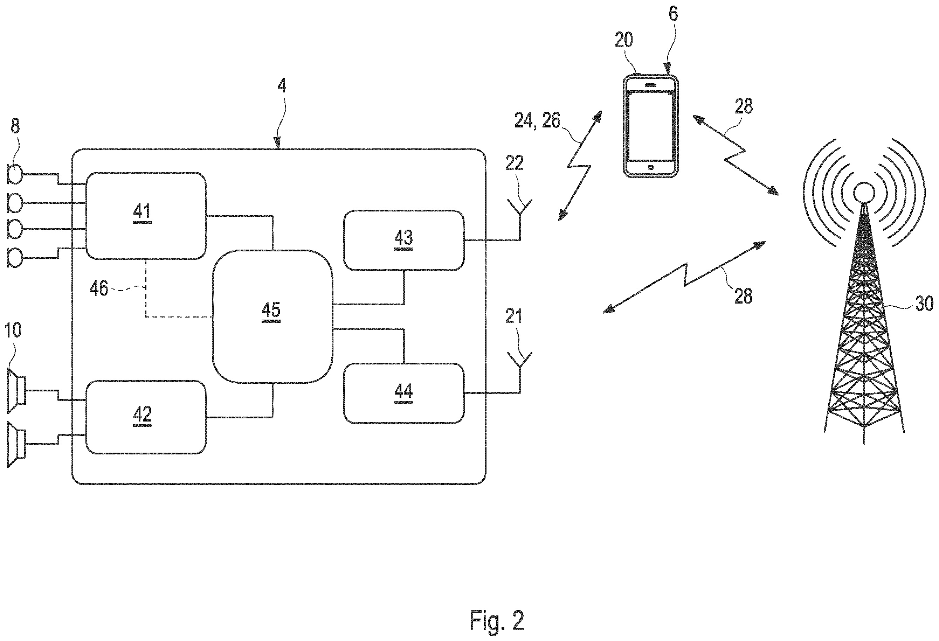

Figur 2 zeigt in einer schematischen Detaildarstellung die in Figur 1 gezeigte Haupteinheit 4 mit weiteren drahtlosen Verbindungen. Die Haupteinheit 4 umfasst ein Verstärkermodul 42 zum Verstärken des digitalen Audiosignals und ein Audiosignalverarbeitungsmodul 41 zum Verarbeiten des Audiosignals.

Um die Freisprechfunktion zu schaffen, sind vier Mikrofone 8 mit dem Audioverarbeitungsmodul 41 und zwei Lautsprecher 10 mit dem Verstärkermodul 42 verbunden. Selbstverständlich können auch abweichende Anzahlen von Mikrofonen 8 und/oder Lautsprechern 10 an die Haupteinheit 4 angeschlossen sein.

Das Audiosignalverarbeitungsmodul 41 umfasst einen oder mehrere sogenannte Audiocodecs (Sprachkodierer/-dekodierer), welche ein von den Mikrofonen 8 erfasstes akustisches Sprachsignal in ein digitales Audiosignal transformieren und umgekehrt. Dabei unterscheiden sich die Audiocodecs anhand der zur Transformation jeweils ausgeführten Algorithmen sowie der von den Algorithmen jeweils verwendbaren und verwendeten Abtastfrequenzen.

Die Haupteinheit 4 umfasst eine Antenne 22 und ein mit der Antenne 22 verbundenes nicht dargestelltes Bluetooth-Modul, mittels dessen die Haupteinheit 4 mit dem mobilen Endgerät 6 koppelbar ist. Ferner umfasst die Haupteinheit 4 ein Funkmodul 43, das als ein WLAN-Modul für eine WiFi-Verbindung als die weitere drahtlose Verbindung ausgebildet und ebenfalls mit der Antenne 22 verbunden ist. Als eine weitere Schnittstelle zur drahtlosen Kommunikation umfasst die Haupteinheit 4 ein internes Mobilfunkmodul 44 für eine Mobilfunkverbindung 28 zu einer stationären Mobilfunkbasisstation 30.

Die Haupteinheit 4 umfasst weiterhin ein Audiosteuerungsmodul 45 zum Steuern des Audiosignalverarbeitungsmoduls 41 durch Bestimmen eines geeigneten Audiocodecs sowie einer optimalen Abtastfrequenz, mittels derer das akustische Sprachsignal in ein digitales Audiosignal transformiert wird und umgekehrt, und Einstellen der drahtlosen Verbindung 26, 28, über die das Audiosignal ausgetauscht wird. Dazu weist das Audiosteuerungsmodul 45 Schnittstellen zu dem Audiosignalverarbeitungsmodul 41, dem Verstärkermodul 42, dem Funkmodul 43 und dem internen Mobilfunkmodul 44 auf und ist mit diesen über die jeweilige Schnittstelle verbunden. Die Schnittstelle zu dem Audiosignalverarbeitungsmodul 41 kann eine separate Steuerleitung 46 umfassen. Das Audiosteuerungsmodul 45 kann beispielsweise als App vorgesehen und in der Haupteinheit 4 installiert sein.

Die Haupteinheit 4 ist konfiguriert, mit dem über eine Bluetooth-Verbindung 24 gekoppelten mobilen Endgerät 6 ein digitales Audiosignal über die weitere drahtlose Verbindung 26 auszutauschen, welche neben der Bluetooth-Verbindung 24 bestehen kann, und ein Audiosignal mit einer Abtastfrequenz, welche höher als 16 kHz ist und insbesondere mindestens 44 kHz beträgt, mit dem mobilen Endgerät 6 auszutauschen. Alternativ kann die Haupteinheit 4 das digitale Audiosignal aber auch über das interne Mobilfunkmodul 44 und die von diesem bereitgestellte Mobilfunkverbindung 28 austauschen. Wenn sich das Fahrzeug 2 innerhalb der Reichweite eines stationären WLAN-Hotspots befindet, kann die Haupteinheit 4 das digitale Audiosignal anstatt über die Mobilfunkverbindung 28 über eine drahtlose Verbindung zwischen dem Funkmodul 43 und dem WLAN-Hotspot austauschen.

Das mobile Endgerät 6 ist ein über eine Bluetooth-Verbindung 24 koppelbares und über eine weitere drahtlose Verbindung 26, insbesondere eine WiFi-Verbindung, verbindbares Smartphone, kann aber auch ein anderes über die Bluetooth-Verbindung 24 koppelbares sowie über die weitere drahtlose Verbindung 26 verbindbares Mobiltelefon oder Tablet sein. Wie üblich ist das mobile Endgerät 6 konfiguriert, mit einer stationären Mobilfunkbasisstation 30 über eine Mobilfunkverbindung 28 Daten, insbesondere ein digitales Audiosignal, auszutauschen.

Während des Betriebs des Systems sind das mobile Endgerät 6 und die Haupteinheit 4 über eine nur zu Steuerungszwecken verwendete Bluetooth-Verbindung 24 miteinander gekoppelt und über eine weitere drahtlose Verbindung 26, insbesondere eine WiFi-Verbindung, miteinander verbunden. Das Audiosteuerungsmodul 45 bestimmt bei jedem Telefongespräch abhängig von und in Abstimmung mit den jeweils beteiligten Geräten einen geeigneten Audiocodec des Audiosignalverarbeitungsmoduls 41, eine maximale Bandbreite der Audiosignalübertragung sowie die optimale Abtastfrequenz. Das von dem Audiosignalverarbeitungsmodul 41 transformierte digitale Audiosignal wird mit einer Abtastfrequenz, welche höher als 16 kHz ist und insbesondere mindestens 44 kHz beträgt, zwischen dem mobilen Endgerät 6 und der Haupteinheit 4 des Infotainmentsystems des Fahrzeugs 2 über die weitere drahtlose Verbindung 26 ausgetauscht.

Ein Vorteil der erfindungsgemäßen Haupteinheit besteht darin, dass die Audioqualität beim Telefonieren mittels der Freisprecheinrichtung des Fahrzeugs verbessert ist. Ein weiterer Vorteil ist darin zu sehen, dass die erfindungsgemäße Haupteinheit bei jedem Telefongespräch abhängig von mehreren Faktoren stets eine optimale Audioqualität der Freisprecheinrichtung einstellt. Das erfindungsgemäße System ermöglicht eine Ende-zu-Ende-Datenverbindung, bei der die jeweiligen technischen Möglichkeiten, beispielsweise verfügbare Bandbreite oder verfügbare Audiocodecs, und die jeweiligen Umgebungssituationen, beispielsweise Fahrzeugtyp, Fahrzeuggeschwindigkeit oder Geräuschkulisse, aller beteiligten Geräte bekannt sind und optimal aufeinander abgestimmt werden können.

### BEZUGSZEICHENLISTE:

- 2: Fahrzeug
- 4: Haupteinheit
- 6: mobiles Endgerät
- 8: Mikrophon
- 10: Lautsprecher
- 20: Antenne
- 21: Antenne
- 22: Antenne
- 24: Bluetooth-Verbindung
- 26: weitere drahtlose Verbindung
- 28: Mobilfunkverbindung
- 30: Mobilfunkbasisstation
- 41: Audiosignalverarbeitungsmodul
- 42: Verstärkermodul
- 43: Funkmodul
- 44: internes Mobilfunkmodul
- 45: Audiosteuerungsmodul
- 46: Steuerleitung

## Patentansprüche

1. Haupteinheit (4) für ein Infotainmentsystem eines Fahrzeugs (2), welche mit einem mobilen Endgerät (6) über eine Bluetooth-Verbindung (24) koppelbar und konfiguriert ist, bei einem Freisprechen während eines Telefonierens mit einem über die Bluetooth-Verbindung (24) mittels eines Freihandprofils gekoppelten mobilen Endgerät (6) ein eine verbesserte Audioqualität beim Freisprechen ermöglichendes digitales Audiosignal über eine weitere drahtlose Verbindung (26) auszutauschen.

2. Haupteinheit nach Anspruch 1, mit einem Funkmodul (43) für die weitere drahtlose Verbindung (26), insbesondere einem WLAN-Modul für eine WiFi-Verbindung, und/oder einem internen Mobilfunkmodul (44) für eine Mobilfunkverbindung (28).

3. Haupteinheit nach einem der Ansprüche 1 oder 2, mit einem Verstärkermodul (42) zum Verstärken des Audiosignals, einem Audiosignalverarbeitungsmodul (41) zum Verarbeiten des Audiosignals und einem Audiosteuerungsmodul (45) zum Steuern des Audiosignalverarbeitungsmoduls (41).

4. Haupteinheit nach einem der Ansprüche 1 bis 3, welche konfiguriert ist, ein Audiosignal mit einer Abtastfrequenz, welche höher als 16 kHz ist und insbesondere mindestens 44 kHz beträgt, auszutauschen.

5. System mit einem mobilen Endgerät (6) und einer Haupteinheit (4) eines Infotainmentsystems eines Fahrzeugs (2), insbesondere einer Haupteinheit (4) nach einem der Ansprüche 1 bis 4, bei dem das mobile Endgerät (6) und die Haupteinheit (4) über eine Bluetooth-Verbindung (24) koppelbar sind und welches konfiguriert ist, bei einem Freisprechen während eines Telefonierens ein eine verbesserte Audioqualität beim Freisprechen ermöglichendes digitales Audiosignal zwischen dem mobilen Endgerät (6) und der Haupteinheit (4) über eine weitere drahtlose Verbindung (26) auszutauschen, wenn sie über die Bluetooth-Verbindung (24) mittels eines Freihandprofils gekoppelt sind.

6. System nach Anspruch 5, welches konfiguriert ist, das Audiosignal zwischen dem mobilen Endgerät (6) und der Haupteinheit (4) über eine WiFi-Verbindung auszutauschen.

7. System nach einem der Ansprüche 5 oder 6, welches zum Austauschen eines Audiosignals mit einer Abtastfrequenz, welche höher als 16 kHz ist und insbesondere mindestens 44 kHz beträgt, konfiguriert ist.

8. System nach einem der Ansprüche 5 bis 7, bei dem das mobile Endgerät (6) ein Mobiltelefon, insbesondere ein Smartphone, oder ein Tablet ist.

9. Verfahren zum Austauschen eines digitalen Audiosignals zwischen einem mobilen Endgerät (6), insbesondere einem Mobiltelefon, einem Smartphone oder einem Tablet, und einer Haupteinheit (4) eines Infotainmentsystems eines Fahrzeugs (2), insbesondere einer Haupteinheit (4) nach einem der Ansprüche 1 bis 4, bei einem Freisprechen während eines Telefonierens, bei dem das mobile Endgerät (6) und die Haupteinheit (4) über eine Bluetooth-Verbindung (24) mittels eines Freihandprofils gekoppelt werden und bei dem das eine verbesserte Audioqualität beim Freisprechen ermöglichende Audiosignal über eine weitere drahtlose Verbindung (26), insbesondere über eine WiFi-Verbindung, zwischen dem mobilen Endgerät (6) und der Haupteinheit (4), ausgetauscht wird.

10. Verfahren nach Anspruch 9, bei dem ein Audiosignal mit einer Abtastfrequenz, welche höher als 16 kHz ist und insbesondere mindestens 44 kHz beträgt, ausgetauscht wird.

## Claims

1. Main unit (4) for an infotainment system of a vehicle (2) which can be coupled with a mobile end device (6) via a Bluetooth connection (24), and is configured, in a hands-free conversation during a telephone call using a mobile end device (6) coupled via the Bluetooth connection (24) by means of a hands-free profile, to exchange a digital audio signal via a further wireless connection (26) which facilitates improved audio quality during hands-free conversation.

2. Main unit according to claim 1, having a radio module (43) for the further wireless connection (26), particularly a WLAN module for a WiFi connection, and/or an internal mobile radio module (44) for a mobile radio connection (28).

3. Main unit according to any of claims 1 or 2, having an amplifier module (42) for amplifying the audio signal, an audio signal processing module (41) for processing the audio signal and an audio control module (45) for controlling the audio signal processing module (41).

4. Main unit according to any of claims 1 to 3, which is configured to exchange an audio signal with a scanning frequency which is higher than 16 kHz and in particular is at least 44 kHz.

5. System having a mobile end device (6) and a main unit (4) of an infotainment system of a vehicle (2), in particular a main unit (4) according to any of claims 1 to 4, in which the mobile end device (6) and the main unit (4) can be coupled via a Bluetooth connection (24) and which is configured, in a hands-free conversation during a telephone call, to exchange a digital audio signal, facilitating an improved audio quality during hands-free conversation, between the mobile end device (6) and the main unit (4) via a further wireless connection (26), when they are coupled via the Bluetooth connection (24) by means of a hands-free profile.

6. System according to claim 5, which is configured to exchange the audio signal between the mobile end device (6) and the main unit (4) via a WiFi connection.

7. System according to any of claims 5 or 6, which is configured for exchanging an audio signal with a scanning frequency which is higher than 16 kHz and in particular is at least 44 kHz.

8. System according to any of claims 5 to 7, in which the mobile end device (6) is a mobile telephone, in particular a smart phone, or a tablet.

9. Method for exchanging a digital audio signal between a mobile end device (6), in particular a mobile telephone, a smart phone or a tablet, and a main unit (4) of an infotainment system of a vehicle (2), in particular a main unit (4) according to any of claims 1 to 4, in a hands-free conversation during a telephone call, in which the mobile end device (6) and the main unit (4) are coupled via a Bluetooth connection (24) by means of a hands-free profile, and which the audio signal which facilitates an improved audio quality during hands-free conversation is exchanged via a further wireless connection (26), in particular via a WiFi connection, between the mobile end device (6) and the main unit (4).

10. System according to claim 9, in which an audio signal is exchanged having a scanning frequency which is higher than 16 kHz and in particular is at least 44 kHz.

## Revendications

1. Unité principale (4) pour un système d'infodivertissement d'un véhicule (2), qui peut être couplée à un terminal mobile (6) via une liaison Bluetooth (24) et est configurée pour remplacer lors d'une conversation à mains libres pendant un appel téléphonique avec un terminal mobile (6) couplé via la liaison Bluetooth (24) au moyen d'un profil mains libres un signal audio numérique permettant une qualité audio améliorée lors d'une conversation à mains libres via une autre liaison sans fil (26).

2. Unité principale selon la revendication 1, avec un module radio (43) pour l'autre liaison sans fil (26), en particulier un module WLAN pour une liaison WiFi, et/ou un module de téléphonie mobile interne (44) pour une liaison de téléphonie mobile (28).

3. Unité principale selon l'une quelconque des revendications 1 ou 2, avec un module amplificateur (42) permettant d'amplifier le signal audio, un module de traitement de signaux audio (41) permettant de traiter le signal audio et un module de commande audio (41) permettant de commander le module de traitement de signaux audio (41).

4. Unité principale selon l'une quelconque des revendications 1 à 3, qui est configurée pour remplacer un signal audio avec une fréquence d'échantillonnage qui est supérieure à 16 KHz et est en particulier d'au moins 44 kHz.

5. Système avec un terminal mobile (6) et une unité principale (4) d'un système d'infodivertissement d'un véhicule (2), en particulier une unité principale (4) selon l'une quelconque des revendications 1 à 4, dans lequel le terminal mobile (4) et l'unité principale (4) peuvent être couplés via une liaison Bluetooth (24) et lequel système est configuré pour remplacer lors d'une conversation à mains libres pendant un appel téléphonique un signal audio numérique permettant une qualité audio améliorée lors de la conversation à mains libres entre le terminal mobile (6) et l'unité principale (4) via une autre liaison sans fil (26) lorsqu'ils sont couplés via la liaison Bluetooth (24) au moyen d'un profil mains libres.

6. Système selon la revendication 5, qui est configuré pour remplacer le signal audio entre le terminal mobile (6) et l'unité principage (4) via une liaison WiFi.

7. Système selon l'une quelconque des revendications 5 ou 6, qui est configuré pour remplacer un signal audio avec une fréquence d'échantillonnage qui est supérieure à 16 kHz et est en particulier d'au moins 44 kHz.

8. Système selon l'une quelconque des revendications 5 à 7, dans lequel le terminal mobile (6) est un téléphone mobile, en particulier un smartphone, ou une tablette.

9. Procédé permettant de remplacer un signal audio numérique entre un terminal mobile (6), en particulier un téléphone mobile, un smartphone ou une tablette, et une unité principale (4) d'un système d'infodivertissement d'un véhicule (2), en particulier une unité principale (4) selon l'une quelconque des revendications 1 à 4, dans une conversation à mains libres pendant un appel téléphonique, dans lequel le terminal mobile (6) et l'unité principale (4) sont couplés via une liaison Bluetooth (24) au moyen d'un profil mains libres et dans lequel le signal audio permettant une qualité audio améliorée lors de la conversation à mains libres est remplacé via une autre liaison sans fil (26), en particulier via une liaison WiFi, entre le terminal mobile (6) et l'unité principale (4).

10. Procédé selon la revendication 9, dans lequel un signal audio avec une fréquence d'échantillonnage qui est supérieure à 16 kHz et est en particulier d'au moins 44 kHz est remplacé.
